## Europäisches Patentamt
## European Patent Office
## Office européen des brevets

(19)

(11) Publication number: **0 040 954**
**A1**

(12) **EUROPEAN PATENT APPLICATION**

(21) Application number: 81302244.9

(51) Int. Cl.³: **H 04 Q 7/04**

(22) Date of filing: 20.05.81

(30) Priority: 23.05.80 GB 8017134

(43) Date of publication of application: 02.12.81
Bulletin 81/48

(84) Designated Contracting States: AT BE CH DE FR GB IT
LI LU NL SE

(71) Applicant: THE POST OFFICE, 23 Howland Street,
London W1P 6HQ (GB)

(72) Inventor: Willetts, Dennis, Oakeswell House Collingwood
Road, Witham Essex (GB)
Inventor: Denman, Derek, 1 Somerset Ave, Chessington
Surrey (GB)
Inventor: Boomer, Michael John, 11 Orchard Road,
London N6 5TR (GB)

(74) Representative: Rackham, Stephen Neil et al, GILL
JENNINGS & EVERY, 53/64 Chancery Lane London
WC2A 1HN (GB)

(54) **Radiopaging system.**

(57) A countrywide or nationwide radiopaging system which enables a subscriber situated substantially anywhere in a country to be contacted by a caller also located anywhere in that country includes at least four paging control equipments (3) located in different geographical regions and each connected to the public switched telephone network (6) of its own region. Each paging control equipment controls the operation of a number of zone transmission controllers (4) and through them transmitters covering all the zones in its own region, the zones throughout the regions being associated into three sets of zones and arranged so that zones of any one set are always separated from any other zone in said one set by at least one zone from one of the other two sets whereby simultaneous transmissions at a particular frequency in zones in said one set do not interfere with one another. The radiopaging system also includes a high speed data intercommunication means (5) to enable intercommunication between all of the paging control equipments (3) directly or via one or more intermediate paging control equipments (3) to enable paging calls received by any one of the paging control equipments (3) and to enable the paging call codes generated by any one of the paging control equipments (3) to be communicated to any other paging control equipment (3) for transmission over any of the zones controlled by the other paging control equipment (3).

0040954

- 1 -

## RADIOPAGING SYSTEM

This invention relates to a radiopaging system which is capable of operating over a large area and with a large number of subscribers.

Most radiopaging systems which are in operation at the present time only operate over a particular region covering, for example, a large city or a group of smaller cities or towns in the same geographical area which is treated for the purposes of a radiopaging system as a single conglomerate.

In the past, such a radiopaging system has been formed by a single paging control equipment connected in between the public switched telephone network and radio transmitters covering various zones which, together define the region covered by the radiopaging system. The paging control equipment has usually included two identical processors which operate in a load-sharing configuration and either of which can accept the entire workload of the paging control equipment in the event of the failure of the other. A caller trying to establish contact with one of the pagers in that region uses their telephone and the public switched telephone network to communicate with the paging control equipment. The paging control equipment typically has a capability of 100,000 paging numbers and, when the paging control equipment receives a particular unique number which has been dialled by the caller trying to establish contact with one of the pagers in that region, the paging control equipment consults its internal memory to check that the dialled number corresponds to a valid paging number and, if so, looks up the paging call code that has been assigned to

0040954

that paging number, feeds this paging call code to the transmitters and then acknowledges the receipt of the paging call. The paging call code is then transmitted over the entire region covered by the paging control equipment. Typically the transmitters together form a part of a simulcast transmission system.

This system is perfectly satisfactory for dealing with particular areas where the maximum number of pagers required is no greater than 100,000 and where the people to be paged do not normally roam outside the particular region covered by the system. However, it is obviously desirable to be able to contact a person irrespective of where they have roamed and it is particularly desirable to be able to contact a person over larger geographical areas such as, whole countries. For this reason, it has been proposed to set up "national" radiopaging networks which extend over a large number of regions and so extend over an entire country or even an entire group of adjacent countries such as those forming a particular land mass.

One such example of a proposal for a "national" radiopaging system is shown in United States of America Patent Specification No 4 178 476. This specification proposes a scheme in which a number of local radiopaging systems are interconnected via the public switched telephone network to enable a paging number dialled to any particular local paging control equipment or paging terminal to be switched to and transmitted over the region covered by any other local paging control equipment or paging terminal. In this proposal this is achieved by inserting a destination controller between the paging terminal on the transmitters covering a local zone and arranging for the destination controller to pass local only calls directly from the paging terminal to the transmitter whereas for non-local calls the destination controller directs the call to the appropriate local paging terminal for the region in which it is required that the paging call be transmitted. The destination controller can also receive calls from other paging terminals and apply them directly to the transmitter of its own region. In this system, a paging call is only transmitted over a particular single local region and the particular region over which the paging call is to be transmitted is controlled by a transit controller having a location table that contains an entry for each national paging number which contains the current whereabouts for that particular pager. As the person to be paged moves about the country they update the information in the location table of the transit controller by dialling particular codes via the public switched telephone network into the transit controller and it is possible to suspend the paging service whilst the subscriber is moving from one zone to another and then, interrogate the transit controller once the subscriber arrives in a new zone. This proposed system only transmits a paging call code over a single particular region and the particular region over which it is transmitted is controlled entirely by the subscriber having to update the memory in the transit controller with regard to their location and movements. A further problem is that the particular local regions over which the individual paging systems operate are not sufficiently comprehensive to cover the entire country and consequently if the subscriber to be paged is located in between two local paging systems no paging is possible.

Another national radiopaging system is shown in United States of America patent specification No 3 575 558. This specification again describes a system in which paging is carried out in a number of local regions and then these regions are interconnected by the public switched telephone network to enable paging calls to be made in other than local regions. In the system described in this specification, storage centres are provided to intercept telephone calls from the public switched telephone network and to send the paging number either to its local zone or, to other, remote storage centres. In this system each storage centre maintains its own storage record of the service requirements of a particular paging number and thus, updating as the service requirement of the subscribers is difficult because of the multiplicity of service records held in the different storage centres. In particular, this system does not provide for any interaction or control between transmissions from different regions and thus, overlap in the geographical areas covered by the various local radiopaging services leads to interference between geographically adjacent zones. Alternatively, if the regions are sufficiently remote from one another to ensure that no interference takes place then there are once again deadbands between adjacent radiopaging regions in which no radiopaging is possible. This system further does not allow for any roaming of the party trying to contact the pager and consequently, initiating calls have to be made from the local area only.

Thus, both of these previous proposals provide systems for interconnecting existing radiopaging systems to provide a greater degree of flexibility in the regions over which a paging call is transmitted but neither of these proposals are suitable for a comprehensive nationwide radiopaging system which firstly enables paging call codes to be transmitted over substantially an entire country or land mass and also enables paging calls to be instigated from any part of that entire country or land mass.

According to this invention a radiopaging system comprises at least four paging control equipments located in different geographical regions with each connected to the public switched telephone network of its own region, each paging control equipment controlling the operation of the number of zone transmission controllers and through them transmitters covering all of the zones in the same region, the zones throughout the regions being associated into three sets of zones and arranged so that zones in any one set are always separated from any other zone in said one set by at least one zone from one of the other two sets whereby simultaneous transmissions at the same frequency in zones in said one set do not interfere with one another, and high speed data intercommunication means to enable intercommunication between all of the paging control equipments directly or via one or more intermediate paging control equipments to enable paging calls received by any one of the paging control equipments to be transferred to another of the paging control equipments and to enable a paging call code generated by any one of the paging control equipments to be communicated to any other paging control equipment for transmission over any of the zones controlled by the other paging control equipment.

With the system in accordance with this invention a subscriber can select which zones the paging calls are to be transmitted over and thus, the subscriber can select to be paged over the entire area covered by all the different zones or simply select to be paged over a single zone. By selecting to be paged over all of the zones a subscriber is free to roam almost anywhere about the entire country or land mass and yet, can still be contacted by radiopaging. Naturally, it may be decided that for economic reasons it is not desirable to provide transmissions to parts of a particular country that are substantially uninhabited or do not contain any major towns or industrial centres. However, the system is arranged so that it can be made to cover an entire country or land mass. Equally, if the subscriber only wishes to be paged in one particular region or even one particular zone within a particular region the system can be arranged to transmit paging calls only over that particular region or, only over that particular zone, and thus the system as a whole is not overloaded by the transmission of all the paging calls over the entire country or land mass. This arrangement not only leads to much better flexibility but also leads to an overall increase in the capacity of the subscribers that can be accommodated.

Since each of the paging control equipments is connected to its local public switched telephone network the person wishing to contact a particular subscriber merely contacts their local paging control equipment even if the paging control equipment which is local to the person wishing to make contact is not the "home" paging control equipment of the subscriber. In this case, the paging control equipment local to the person wishing to make contact establishes contact via the high speed data intercommunication means with the "home" paging control equipment of the subscriber and then the "home" paging control equipment of the subscriber controls the subsequent paging operation and so outputs a paging call over those areas selected by the subscriber. Again, the majority of paging calls are likely to be instigated by people wishing to make the paging call who are located in the same region as the "home" paging control equipment of the subscriber and thus, in this case, the majority of calls are instigated by the person wishing to make the call who is in the same region as the region to be paged and therefore most of the calls go straight to the "home" paging control equipment which is common both to the subscriber and to the person wishing to make contact. However, with the system in accordance with this invention in the event of either of these being different, contact can still be established.

The high speed data communication means preferably interconnects each of the paging control equipments directly with each other and comprises a number of synchronous data communication lines. This is particularly suitable when the number of paging control equipments is small, for example five or less. However, when the number of paging control equipments is larger, the high speed data intercommunication means preferably comprises a mesh network of high speed data communication lines to which each paging control equipment is connected and by which each paging control equipment is directly connected to some of the other paging control equipments and indirectly connected to the remainder. Further, the high speed data intercommunication means may comprise a packet switching network extending between all of the paging control equipments.

The high speed data intercommunication means are also used to handle administration messages between the paging control equipments to update information with regard to pager numbers, updates in paging numbers, and interrogation of the particular pager number service records. The intercommunication means may also be used to communicate any changes that occur that affect the operation of the network, for example, interpaging control equipment data, communications lines status messages and pager zone status messages. Finally, the high speed data intercommunication means may also carry network synchronisation messages to maintain the network in relative synchronisation throughout.

Preferably each of the zone transmission controllers controls transmissions over a single zone associated with the zone transmission controller and, in this case, it is preferred that each zone transmission controller feeds a number of simulcast transmitters covering each entire zone. The transmissions are arranged so that transmissions at any particular frequency are broadcast over only those zones in a single set at any instant. Thus at any instant since the transmissions at a particular frequency are only being broadcast over a single set of zones and since the zones in each set are arranged so that no interference takes place between them, this ensures that no interference takes place in the transmission of the paging numbers over the system. However, to increase the capacity of the system, transmissions may be made at two or more different frequencies and, in this case, whilst transmissions are being made at one frequency in one set of zones they may be made in another set of zones at a different frequency.

Preferably a telephone line interface equipment is provided between the public switched telephone network and each of the paging control equipments and this converts the Strowger line disconnect signal pulses into digital form. Telephone line interface equipment is not required when the public switched telephone network is itself based on digital signalling such as system X and its successors.

A particular example of a national radiopaging system to be used throughout Great Britain will now be described with reference to the accompanying drawings; in which:-

Figure 1 shows the zone arrangement of the transmission zone in each area covered by the system;

Figure 2 is a timing diagram showing the time slot cycles for the transmission to the different zones;

Figure 3 is a schematic block diagram of the entire system;

Figure 4 is a schematic block diagram of a zone transmission controller; and,

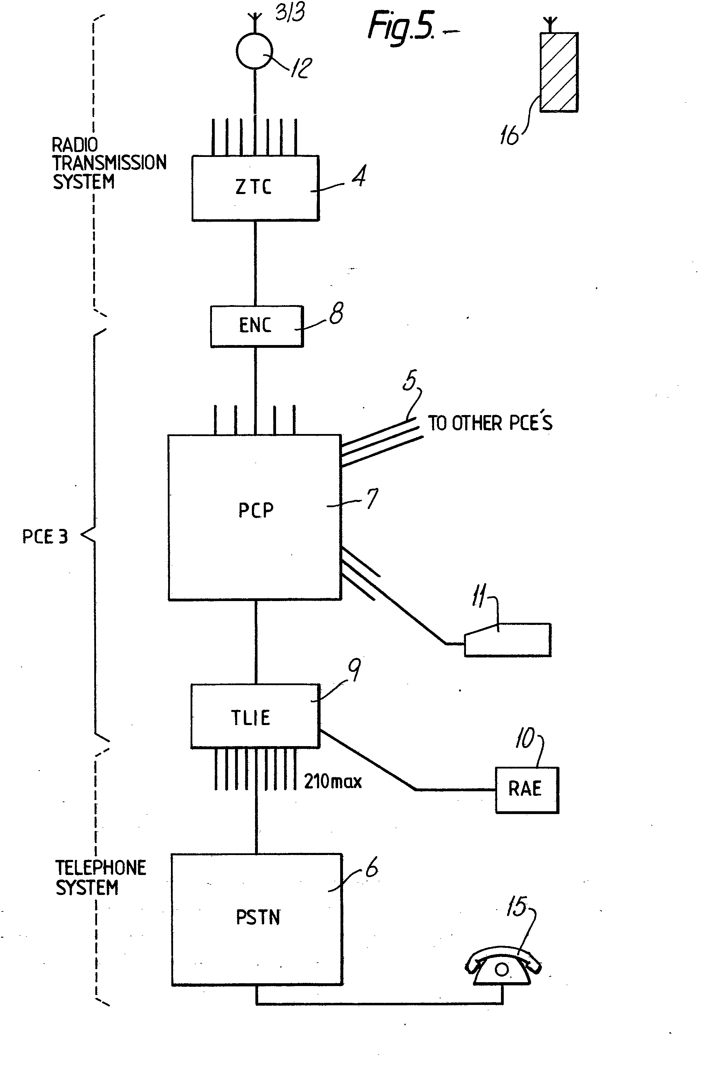

Figure 5 is a block diagram showing a complete link from an originating caller to a pager.

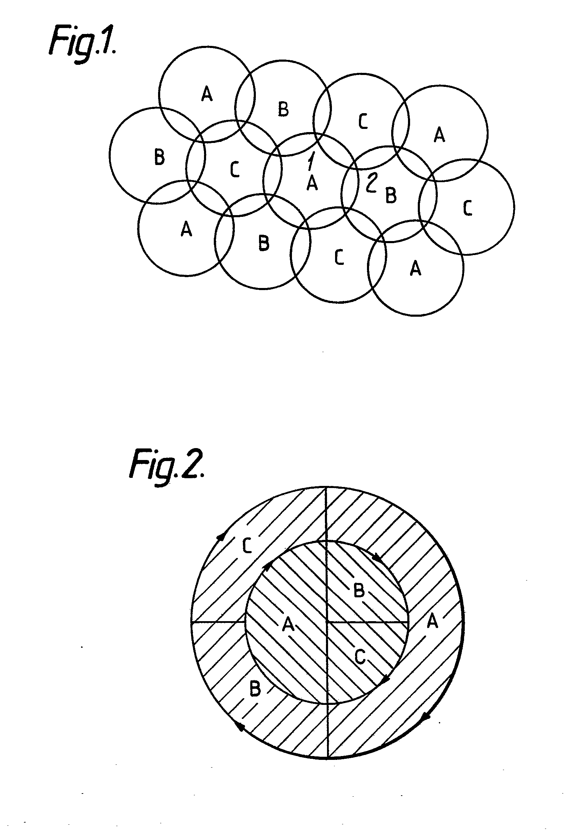

Britain is divided into about forty different radiopaging transmission zones and each zone includes a number of simulcast transmitters so that the transmissions can be received at all points over that transmission zone. The zone boundaries, the transmitter sites and their powers are arranged in such a way that transmission from any zone does not interfere with coincident reception in any other, non-abutting, zone. The zones are divided into three sets, A, B and C, as shown by the letters in the zones shown in Figure 1. Thus, taking the zone A reference numeral 1 in the centre of Figure 1, this is surrounded by zones from sets B and C. Equally, zone 2 which is a B zone is surrounded by zones from sets A and C. Thus, with this arrangement a transmission at a particular frequency from one of the zones in set A does not interfere with a transmission at the same particular frequency from any of the other zones in set A. Similarly, no material interference occurs between the zones in sets B and C. Thus, different information may be transmitted simultaneously without mutual interference by all the zones in set A and likewise with sets B and C.

Paging calls are transmitted over the zones in a two minute transmission cycle with only the zones in a single set being paged at any instant but with transmissions being made over all three sets of zones in each two minute cycle. Whilst all three sets may occupy equal length time slots it is normal for one set, for example, set A, to occupy a longer time slot but no time slot occupies more than 5% of the total cycle time. Typically set A occupies one minute of the cycle and the other two sets, sets B and C each occupy 30 seconds of the total cycle time. The zones which occupy the longest time slots are preferably arranged so that the corresponding zones, set A zones in this example, cover the largest centres of population.

In this example, London, Manchester, Birmingham and Glasgow are all located in zones in set A. The longer time slot naturally allows a greater number of paging call codes to be transmitted in each cycle.

To increase the capacity of the system, each transmitter may transmit signals over two different frequency channels, and, in this case, a complementary time slot cycle arrangement is used in the second channel. The timing diagram shown in Figure 2 shows the time slot cycle arrangement with that used in the first channel cross-hatched with lines moving downwards from left to right, and with that used for the second channel cross-hatched with the lines moving downwards from right to left.

Britain is also divided into five regions with each region containing eight zones. Each region has a substantially similar set of equipment associated with it and each set of equipment comprises a paging control equipment 3 feeding eight associated zone transmission controllers 4. Each zone transmission controller 4 controls transmitters 5 in the zones within each region. Each of the paging control equipments 3 is directly connected to each other paging control equipment by 1200 band synchronous high speed data communication lines 5 to provide intercommunication between the paging control equipments 3 and each paging control equipment 3 is also connected to the public switched telephone network 6.

Each of the paging control equipments 3 comprise a paging control processor 7 formed by a pair of GEC 4070 computers which are paired in an active and standby configuration. Each computer has a four megabyte drum holding information on at least 100,000 paging numbers. Each computer also includes a 256 kilobyte core store to process the calls passing through the system and these two core stores are kept in step so that the computers can change from a standby to active condition at any instant without loss of any paging calls or other information. The output from the paging control processors is fed to an encoder 8 which generates serial data in the particular binary format required for the types of pager used with the system, from the output from the processors. In regions equipped with Strowger telephone equipment, which is most of Britain, telephone line interface equipment 9 is located between the public switched telephone network and the paging control processors 7. The telephone line interface equipment accepts dialled loop disconnect pulses from a maximum of 210 incoming circuits and converts these into a binary format for transmission to and operation by the paging control processors 7. The telephone line interface equipment also enables the appropriate supervisory tones to be generated by connecting the originator of a paging call to an announcement from recording announcement equipment 10 to indicate when a paging call has been accepted or when, for example, the subscriber is unobtainable or there are operating difficulties. The paging control processors 7 have a number of data terminals 11 connected to them by which access can be gained to the storage system in the paging control processor and from which operators can enter and modify details of customers' requirements. The paging control processors 7 are also connected to the other paging control processors in other paging control equipments via the high speed synchronous data lines 5.

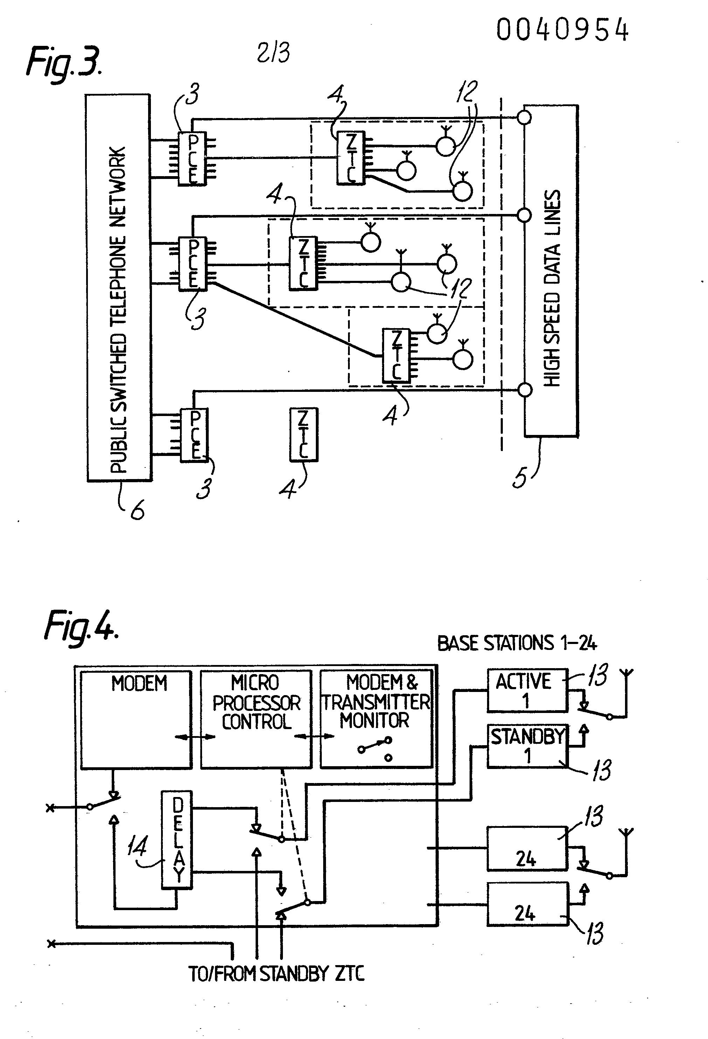

Each zone transmission controller 4 part of which is shown in Figure 4 is fully duplicated, again with an active and standby side. The zone transmission controller passes on key-up and RF channel select commands generated by the encoders 8 to base stations 12 throughout each zone and monitors their operation. Up to twenty four base stations 12, each with dual transmitters 13 can be connected to each of the zone transmitter controllers. After their initial setting up the zone transmission controllers cimply act to forward the paging calling codes passed from the encoder 8 in the paging control equipment 3 to the base stations 12 within each zone. At the heart of each zone transmission controller is a microprocessor which performs the monitoring, switching and supervisory functions and sends back to the paging control processors 7 data on the status of all base stations 12 under its control. If a fault occurs in the active side of the zone transmission controller 4 the encoder 8 in the paging control equipment is switched to the standby size of the zone transmission controller 4 and an appropriate alarm condition is initiated. Figure 4 shows a delay 14 included between the zone transmission controller and the base stations 12 which is tapped at various points to ensure that signals from transmitters 13 are all in phase. Again, there is an active and standby transmitter at each base station. The zone transmission controller 4 changes over from one transmitter to another in the event of a line or transmitter fault and indicates the changeover to the paging control equipment 3.

The paging numbers dialled by an originating caller trying to establish contact with a particular pager holder consists of a three figure STD (Subscriber Trunk Dialling) code by which the call is routed to its nearest paging control equipment, followed by a further six digits. The paging numbers are allocated in blocks of one thousand to one or other of the paging control equipments 3. The first three digits after the STD code identify the particular block and the capacity of the system may be increased by allocating more than one STD code to the paging numbers and generating a further, seventh digit, from the particular STD code used with the paging number. The same paging number is used by an originating caller from anywhere within Britain, and the call is always connected to the paging control equipment covering the region in which the call is made. The memory in each paging control processor 7 includes a paging number distribution table. This table is accessed using the first three digits of the paging number following the STD code and any seventh digit and provides an output which indicates the "home" paging control equipment 3, which is a further short number when the "home" paging control equipment 3 is remote, and which is a larger number when the particular paging number is associated with that paging control equipment 3. The larger number generated by the paging number distribution table indicates the address of the particular block of one thousand paging numbers and then the last three digits of the paging number are used to address a service file address table of that block. The service file address table in turn provides the address of the service file associated with that particular paging number and contains information with regard to the current status, the zones over which calling codes are to be transmitted, the type of pager held by the subscriber and the calling code that it responds to. Upon accessing the service file, if the paging number has a current status the calling code associated with that paging number and information on the type of pager are fed to the encoder 8 and to processors 7 controlling regions containing any other zones in which the calling code is to be transmitted.

When the output from the paging number distribution table indicates that the block containing the paging number is in a remote processor 7 the output from the table is used to channel the paging number to its "home" processor 7 and then the block address used to access the service file in a similar way. Once the calling code has been output from the service call an acknowledgement is triggered and this actuates the recorded announcement equipment 10 to indicate to the originating caller that the paging call has been accepted. Naturally if the service file shows that the paging number does not have a current status or if some of the zones in which paging is required are inaccessible then appropriate messages are emitted by the recorded announcement equipment 10.

The use of the paging number of access a service file containing information on the type of pager and the particular calling code allotted to the paging number provides great flexibility. Firstly, it enables the same number to be called from anywhere in a particular country when wishing to contact a particular pager. In addition it is possible to provide group call facilities so that by dialling a single paging number all of a group of paging numbers are paged, each over their own particular chosen zones. In this case, accessing the service file also accesses a subsidiary file which, in turn, addresses other pagers' numbers in a particular block and this, in turn leads to the service files of these other numbers being addressed and their calling codes emitted.

The encoders 8 generate serial data in the particular binary formats required by the type of pager held by the subscriber and then this calling code is sent via the zone transmission controllers 4 to the base stations 12 and transmitters 13 where it is transmitted in the particular zones requested. This signal is then received by a pocket paging receiver 16 carried by the paging subscriber.

Substantially all the facilities are duplicated in this paging system and this, coupled with automatic changeover at nodal points, ensures that in the event of any failure of the system the standby unit is switched into the active state and ensures that substantially no paging calls are lost.

The advantages of this national system are:-

1.     That it uses cheap, single channel pagers and can be arranged to cater for several different types of paging code.

2.     There is a national roaming facility for any single pager.

3.     That transmission costs are reduced by arranging that paging takes place only in the zones selected as being relevant by each user which enables all the zones over an entire country to be used but, at the same time, enables only selective zones to be used by users that do not roam with a consequent saving of transmission time.

4.     It enables no more than two minutes to elapse between the request for paging and the radio transmission of a paging call in all the zones that are required.

5.     The ultimate capacity of the system is at least 1.6 million subscribers.

6.     Paging calls are able to be dialled from anywhere in the country without alteration of the number appropriate for any pager.

7.     Transmission failure is a rare occurrence in view of the duplication within the system.

## C L A I M S

1.    A radiopaging system comprising at least four paging control equipments (3) located in different geographical regions with each connected to the public switched telephone network (6) of its own region, each paging control equipment (3) controlling the operation of a number of zone transmission controllers (4) and through them transmitters (13) covering all the zones in its own region, the zones throughout the region being associated into three sets of zones and arranged so that zones in any one set are always separated from any other zone in said one set by at least one zone from one of the other two sets whereby simultaneous transmissions at the same frequency in zones in said one set do not interfere with one another, and high speed data intercommunication means (5) to enable intercommunication between all the paging control equipments (3) directly or via one or more intermediate paging control equipments (5) to enable paging calls received by any one of the paging control equipments (3) to be transferred to another of the paging control equipments (3) and to enable the paging call codes generated by any one of the paging control equipments (3) to be communicated to any other paging control equipment (3) for transmission over any of these zones controlled by the other paging control equipment (3).

2.    A radiopaging system according to claim 1, in which the high speed data intercommunication means (5) interconnects each of the paging control equipments (3) directly to the other paging control equipments (3), and comprises a number of duplicated data communication lines.

3.      A radiopaging system according to claim 1, in which the high speed data intercommunication means (5) comprises a mesh network of high speed data communication lines to which each paging control equipment (3) is connected and by which each paging control equipment (3) is directly connected to some of the other paging control equipments (3) and indirectly connected to the remainder.

4.      A radiopaging system according to claim 1, in which the high speed data intercommunication means (5) is a packet switching network extending between all of the paging control equipments (3) with all of the paging control equipments (3) connected to the packet switching network.

5.      A radiopaging system according to any one of the preceding claims, in which  each of the zone transmission controllers (4) controls transmissions over a single zone associated with that zone transmission controller (4) and in which each zone transmission controller (4) feeds a number of simulcast transmitters (13) covering each zone.

6.      A radiopaging system according to any one of the preceding claims, in which transmissions of a particular frequency are broadcast  over only those zones in a single set at any instant but in which broadcasts are transmitted over two channels simultaneously, the two channels operating at different frequencies .

7.      A radiopaging system according to any one of the preceding claims, in which the high speed data intercommunication means (5) also handles administration messages between the paging control equipment (3) to update information with regard to pager numbers, and interrogate the service records of a particular pager number.

8.      A radiopaging system according to any one of the preceding claims, in which the high speed data intercommunication means (5) also communicates any changes that occur that affect the operation of this system, for example interpaging control equipment data, communications lines status messages and pagers' own status messages.

9.    A radiopaging system according to any one of the preceding claims, in which the intercommunication means also carries system synchronisation messages to maintain the system in relative synchronism throughout.

Fig.1.

Fig.2.

Fig.3.

2/3

0040954

PUBLIC SWITCHED TELEPHONE NETWORK

HIGH SPEED DATA LINES

Fig.4.

BASE STATIONS 1-24

MODEM

MICRO PROCESSOR CONTROL

MODEM & TRANSMITTER MONITOR

ACTIVE 1

STANDBY 1

DELAY

24

24

TO/FROM STANDBY ZTC

0040954

*Fig.5.-*

RADIO TRANSMISSION SYSTEM

PCE 3

TELEPHONE SYSTEM

3/3

12

ZTC — 4

16

ENC — 8

5

TO OTHER PCE'S

PCP — 7

11

TLIE — 9

210max

RAE — 10

PSTN — 6

15

European Patent
Office

**EUROPEAN SEARCH REPORT**

004Application Number

EP 81 30 2244

## DOCUMENTS CONSIDERED TO BE RELEVANT

| Category | Citation of document with indication, where appropriate, of relevant passages | Relevant to claim |
|---|---|---|
| D | US - A - 4 178 476 (FROST)<br><br>* abstract; column 6, line 25 to column 9, line 44; column 15, line 64 to column 17, line 49; figures 1-4 * | 1-4,7 |
| | 29th IEEE VEHICULAR TECHNOLOGY CONFERENCE, March 27-30, 1979 NEW YORK (US)<br>M.H. CALLENDAR et al.:"Network design for a fully automatic wide area radio-telephone service" pages 245-252<br><br>* page 250, left-hand column, line 1 to page 252, right-hand column, line 44; figures 10,11 and 14 * | 1,2,7 |
| | 29th IEEE VEHICULAR TECHNOLOGY CONFERENCE, March 27-30, 1979 NEW YORK (US)<br>J.D. WELLS:"Nationwide mobile telephone operation" pages 253 to 258<br><br>* page 255, right-hand column, line 1 to page 256, right-hand column, line 27, figures 1-4 * | 1,2 |
| D | US - A - 3 575 558 (LEYBURN)<br><br>* column 1, line 66 to column 2, line 48; figure 1 * | 1 |

**CLASSIFICATION OF THE APPLICATION (Int. Cl.3)**

H 04 Q 7/04

**TECHNICAL FIELDS SEARCHED (Int. Cl.3)**

H 04 Q 7/00
　　　　7/02
　　　　7/04

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 31-08-1981 | WANZEELE |

EPO Form 1503.1   06.78